# EUROPÄISCHE PATENTANMELDUNG

(11) **EP 0 879 844 A1**
(43) Veröffentlichungstag der Anmeldung: **25.11.1998**
(21) Anmeldenummer: 98108393.4
(22) Anmeldetag: 08.05.1998
(51) Int. Cl.: C08J 9/00, C08J 9/18

(54) **Polyolefinschaumstoffe hoher Wärmeformbeständigkeit**

(30) Priorität: 20.05.1997 DE 19720975
(71) Anmelder: PCD Polymere AG, 2323 Schwechat-Mannswörth (AT)
(72) Erfinder: Rätzsch, Manfred, Prof. Dr., 4202 Kirchschlag (AT); Bucka, Hartmut, Dipl.-Ing., 4622 Eggendorf 125 (AT); Hesse, Achim, Dr., 4020 Linz (AT); Panzer, Ulf, Dr., 4320 Perg (AT); Reichelt, Norbert, Dr., 4501 Neuhofen (AT)
(74) Vertreter: Schinke, Herbert, Dr. Dr., Patentanwaltskanzlei

(57) **Zusammenfassung**

Polyolefinschaumstoffe hoher Wärmeformbeständigkeit werden aus modifizierten Polypropylenen und nichtmodifizierten Polypropylenen hergestellt, wobei die eingesetzten modifizierten Polypropylene durch Mischung von Polypropylenpartikeln mit thermisch zerfallenden Radikalbildnern, Sorption leichtflüchtiger bifunktioneller Monomerer und Erwärmen und Aufschmelzen der Mischung erzeugt werden.

Anwendungsgebiete der Polyolefinschaumstoffe hoher Wärmeformbeständigkeit sind der Verpackungssektor, KFZ-Teile, Sport- und Freizeitgeräte, industrielle Anwendungen sowie Anwendungen auf dem Bausektor.

## Beschreibung

Die Erfindung betrifft Polyolefinschaumstoffe hoher Wärmeformbeständigkeit aus modifizierten und nichtmodifizierten Polypropylenen.

Die Herstellung von Polyolefinschaumstoffen aus nichtmodifizierten Polypropylenen ist bekannt.

Für die Herstellung von Extrusionsschäumen werden neben Polypropylen-Homopolymeren ebenfalls Propylen-Ethylen-Copolymere (US 55 27 573) eingesetzt. Von Nachteil bei dem Einsatz von Standard-Polypropylenen bei der Extrusionsschaumherstellung ist der hohe Anteil an offenzelligen Strukturen und der erforderliche Einsatz von Spezialabzugseinrichtungen. Bei der Herstellung von Extrusionsschäumen bestimmt die Schmelzviscosität das Zellenwachstum und ist daher ein Parameter des Zellenkollapses. Bei Standard-PP nimmt die Viscosität mit zunehmender Dehnungsbelastung ab, die Folge sind instabiles Zellenwachstum und ungleichmäßige Zellengröße. Bei Einsatz von Standard-PP, CO₂ als Treibmittel und Nukleierungsmitteln muß der Schaumfolienabzug durch spezielle auf 95°C temperierte Abzugsrollen erfolgen (Dey, S., SPE-ANTEC 1996, 1955-1958).

Die Verarbeitung von nichtmodifizierten Polypropylenen und von nichtmodifizierten Polypropylen-Copolymeren zu Partikelschäumen nach dem Suspensionsimprägnierverfahren erfordert aufwendige dezentrale Autoklavenanlagen als Betriebsstätten. Die Schaumherstellung erfolgt durch Imprägnierung von PP-Partikeln mit ⌀0,5-5 mm in wässriger Suspension mit 0,1-0,4kg Treibmittel/kg Polymer bei einer Temperatur 5 bis 20°C unterhalb des Kristallitschmelzpunkts des Polymers und nachfolgendes Entspannen unter Aufschäumen (EP 0 453 836, DE 40 12 239).

Die Erzielung einer gleichmäßigen Zellstruktur beim Suspensionsimprägnierverfahren unter Einsatz nichtmodifizierter Polypropylene erfordert aufwendige technologische Maßnahmen wie Begasung des Reaktorinhalts am Reaktorboden beim Ausfahrvorgang (unterhalb des Rührers bzw. durch den Rührer) (EP 0 630 935) oder Zugabe einer Heizflüssigkeit während des Entleerens des Autoklavs, bis 3/4 der Partikelschaummenge ausgelassen ist (EP 0 290 943). Ein weiteres Problem bei Partikelschäumen, die aus nichtmodifizierten Polypropylenen unter Einsatz von Butan als Treibmittel hergestellt wurden, besteht in der starken Schrumpfung. Durch eine aufwendige Behandlung der geschrumpften Partikel bei T< 20grd unterhalb der Erweichungstemperatur unter Druckbeaufschlagung mit Luft oder Inertgas kann eine Rückgängigmachung der Schrumpfung erzielt werden (EP 0 687 709).

Bekannt ist weiterhin, Polypropylen durch Einsatz von Polypropylen-Blends und von modifizierten Polypropylenen auf normalen Polyethylen-Standard-Schaumextrudern zu Extrusionsschäumen und Extrusionspartikelschäumen verarbeitbar zu machen.

Bekannte Blendkomponenten für Polypropylen bei der Extrusionsschaumherstellung auf normalen Polyethylen - Standard-Schaumextrudern sind Propylen-Ethylen-CP (EP 0 291 764), Polyethylen (GB 20 99 434), EVA (GB 20 99 434), Butylkautschuk (EP 0 570 221), Styren-Butadien-Kautschuk (US 44 67 052) sowie (Meth)acrylat-Copolymere (US 55 06 307). Diese Blendkomponenten führen jedoch zu einem starken Abfall der Wärmeformbeständigkeit, der Steifigkeit und der Druckfestigkeit der Polypropylenextrusionsschäume.

Bekannte modifizierte Polypropylene, die zur Herstellung von Extrusionsschäumen und Extrusionspartikelschäumen geeignet sind, sind Silan-gepfropftes Polypropylen (EP 0 646 622), durch polymerisationsfähige Peroxide modifiziertes Polypropylen (WO 94 05 707) und durch Hochenergie-Elektronenbestrahlung modifiziertes Polypropylen (EP 0 190 889, De Nicola, A., Polymeric Materials Science and Engineering (1995), 106-108). Möglich ist ebenfalls der ein Einsatz dieser modifizierten Polypropylene in Gemischen mit nichtmodifizierten Polypropylenen.

Der Nachteil des Verfahrens zur Modifizierung von Polypropylen durch Hochenergie-Elektronenbestrahlung besteht in dem sehr hohen sicherheitstechnischen Aufwand für die biologische Abschirmung der hochenergetischen Strahlung, der eine aufwendige Hermetisierung der Bestrahlungskammer durch dicke Spezialbetonwände oder Bleisegmentkonstruktionen, eine aufwendige Strahlenschutzmeßtechnik sowie eine medizinische Überwachung des Bedienpersonals erforderlich macht.

Die Aufgabe der vorliegenden Erfindung bestand in der Entwicklung von Polyolefinschaumstoffen hoher Wärmeformbeständigkeit aus modifizierten Polypropylenen und nichtmodifizierten Polypropylenen, die die beschriebenen Nachteile bekannter Produkte vermeidet und wobei die zur Herstellung der Polyolefinschaumstoffe eingesetzten modifizierten Polypropylene nach einem technologisch einfachen Verfahren zugänglich sein sollten.

Die erfindungsgemäße Aufgabe wurde durch Polyolefinschaumstoffe hoher Wärmeformbeständigkeit mit Schaumdichten von 5 bis 700 kg/m³, bevorzugt von 10 bis 500 kg/m³, aus 1 bis 100 Gew.%, bevorzugt 5 bis 100 Gew.%, modifizierten Polypropylenen und 0 bis 99 Gew.%, bevorzugt 0 bis 95 Gew.%, nichtmodifizierten Polypropylenen gelöst, wobei die zur Herstellung der Polyolefinschaumstoffe eingesetzten modifizierten Polypropylene durch
a) Mischung von Polypropylenpartikeln in einem kontinuierlichen Mischer mit 0,05 bis 3 Masse%, bezogen auf die eingesetzten Polypropylene, an Acylperoxiden, Alkylperoxiden, Hydroperoxiden und/oder Perestern als thermisch zerfallende Radikalbildner, die gegebenenfalls mit inerten Lösungsmitteln verdünnt sind, unter Erwärmung auf 30 bis 100°C, bevorzugt auf 70 bis 90°C, nachfolgend
b) Sorption leichtflüchtiger bifunktioneller Monomerer, insbesondere von C₄- bis C₁₀-Dienen und/oder C₇- bis C₁₀- Divinylverbindungen, durch die Polypropylenpartikel aus der Gasphase bei einer Temperatur T(°C) von 20°C bis 120°C in einem kontinuierlichen Gas-Feststoff-Absorber vor dem Aufschmelzen der Mischung, wobei die mittlere Sorptionszeit τₛ [s] 10s bis 1000 s, bevorzugt 60 s bis 600 s, beträgt, und der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
c) Erwärmen und Aufschmelzen der Polypropylenpartikel, in denen die Acylperoxide, Alkylperoxide, Hydroperoxide und/oder Perester als thermisch zerfallende Radikalbildner und die bifunktionell ungesättigten Monomere sorbiert sind, unter einer Atmosphäre aus Inertgas und diesen leichtflüchtigen bifunktionellen Monomeren bei 110°C bis 210°C, wobei die thermisch zerfallenden Radikalbildner zersetzt werden, nachfolgend
d) Erwärmung der Schmelze auf 220°C bis 300°C unter Entfernung nichtumgesetzter Monomerer und Zerfallsprodukte und
e) Granulierung der Schmelze in an sich bekannter weise
   erfolgt.

Erfindungsgemäß können vor dem Verfahrensschritt a) und/oder e) und/oder vor bzw. während des Verfahrensschrittes c) und/oder d) als weitere Zusatzstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel , 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf die eingesetzten Polypropylene, zugesetzt werden.

Die als thermisch zerfallende Radikalbildner zur Herstellung der modifizierten Polypropylene eingesetzten Acylperoxide sind bevorzugt Benzoylperoxid, 4-Chlorbenzoylperoxid, 3-Methoxy-benzoylperoxid und/oder Methylbenzoylperoxid.

Als Alkylperoxide zur Herstellung der modifizierten Polypropylene sind insbesondere Allyl-tert.butylperoxid, 2,2-Bis(tert.butylperoxybutan), 1,1-Bis-(tert.butylperoxi)-3,3,5-trimethylcyclohexan, n-Butyl-4,4-bis(tert.butylperoxi)valerat, Diisopropylaminomethyl-tert.amylperoxid, Dimethylaminomethyl-tert.amylperoxid, Diethylaminomethyl-tert.butylperoxid, Dimethylaminomethyl-tert.butylperoxid, 1.1-Di-(tert.amylperoxi)cyclohexan, tert.Amylperoxid, tert.Butylcumylperoxid, tert.Butylperoxid, und/oder 1-Hydroxybutyl-n-butylperoxid geeignet.

Bevorzugte Perester und Peroxicarbonate als thermisch zerfallende Radikalbildner für die Herstellung modifizierter Polypropylene sind Butylperacetat, Cumylperacetat, Cumylperpropionat, Cyclohexylperacetat, Di-tert.butylperadipat, Di-tert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert.Butylbicyclo-(2,2,1)heptanpercarboxylat, tert.Butyl-4-carbomethoxyperbutyrat, tert.Butylcyclobutanpercarboxylat, tert.Butylcyclohexylperoxycarboxylat, tert.Butylcyclopentylpercarboxylat, tert.Butylcyclopropanpercarboxylat, tert.Butyldimethylpercinnamat, tert.Butyl-2-(2,2-diphenylvinyl)perbenzoat, tert. Butyl-4-methoxyperbenzoat, tert.Butylperbenzoat, tert.Butylcarboxicyclohexan, tert.Butylpernaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcypropylpercarboxylat, tert.Butyl-4-nitrophenylperacetat, tert.Butylnitrophenylperoxycarbamat, tert.Butyl-N-succinimidopercarboxylat, tert.Butylpercrotonat, tert.Butylpermaleinsäure, tert.Butylpermethacrylat, tert.Butylperoctoat, tert.Butylperoxyisopropylcarbonat, tert.Butylperisobutyrat, tert.Butylperacrylat und/oder tert. Butylperpropionat.

Mit Vorteil sind ebenfalls Gemische dieser thermisch zerfallenden Radikalbildner für die Herstellung der modifizierten Polypropylene geeignet, die für die erfindungsgemäßen Polyolefinschaumstoffe hoher Wärmeformbeständigkeit eingesetzt werden.

Als bifunktionell ungesättigte Monomere für die Herstellung der modifizierten Polypropylene, die für Polyolefinschaumstoffe hoher Wärmeformbeständigkeit eingesetzt werden, sind insbesondere alle aus Gasphase sorbierbaren bifunktionell ungesättigten monomeren Verbindungen anwendbar, die mit Hilfe von freien Radikalen polymerisierbar sind. Bevorzugt angewandt werden folgende bifunktionell ungesättigten Monomere in Anteilen von 0,01 bis 10 Masse%, bevorzugt 0,05 bis 2 Masse%, bezogen auf die eingesetzten Polypropylene :
- Divinylverbindungen wie Divinylanilin, m-Divinylbenzen, p-Divinylbenzen, Divinylpentan und/oder Divinylpropan;
- Allylverbindungen wie Allylacrylat, Allylmethacrylat, Allylmethylmaleat und/oder Allylvinylether;
- Diene wie Butadien, Chloropren, Cyclohexadien, Cyclopentadien, 2,3-Dimethylbutadien, Heptadien, Hexadien, Isopren, und/oder 1,4-Pentadien.

Ebenfalls Gemische dieser ungesättigten Monomeren sind für die Herstellung der modifizierten Polypropylene geeignet, die für die erfindungsgemäßen Polyolefinschaumstoffe hoher Wärmeformbeständigkeit eingesetzt werden.

Die als weitere Zusatzstoffe für die Herstellung der modifizierten Polypropylene geeigneten Stabilisatoren sind bevorzugt Mischungen aus 0,01 bis 0,6 Masse% phenolischen Antioxidantien, 0,01 bis 0,6 Masse% 3-Arylbenzofuranone, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS).

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Als Verarbeitungshilfsmittel können Calciumstearat, Magnesiumstearat und/oder Wachse eingesetzt werden.

Die für die Herstellung der modifizierten Polypropylene eingesetzten Polypropylenpartikel können sowohl aus Propylen-Homopolymeren als auch aus Copolymeren aus Propylen mit α-Olefinen mit 2 bis 18 C-Atomen sowie aus Mischungen der genannten Polypropylene bestehen.

Bevorzugt werden Polypropylenpartikel aus Polypropylenen mit bimodaler Molmassenverteilung, die in einer Reaktorkaskade unter Einsatz von Ziegler-Natta-Katalysatoren oder Metallocenkatalysatoren hergestellt wurden, mit Molmassen-Gewichtsmitteln M_{w} von 500000 bis 1500000 g/mol, Molmassen-Zahlenmitteln Mₙ von 25000 bis 100000 g/mol und M_{w} / Mₙ -werten von 5 bis 60, bevorzugt mit Molmassen-Gewichtsmitteln M_{w} von 600000 bis 1000000 g/mol, Molmassen-Zahlenmitteln Mₙ von 30000 bis 100000 g/mol und M_{w} / Mₙ -Werten von 15 bis 35.

Besonders bevorzugt werden dabei Polypropylen - Homopolymere, statistische Propylen-Copolymere, Propylen-Blockcopolymere, statistische Propylen-Blockcopolymere und elastomere Polypropylene.

Als nichtmodifizierte Polypropylene, die für die Herstellung der erfindungsgemäßen Polyolefinschaumstoffe hoher Wärmeformbeständigkeit zur Anwendung kommen, werden die gleichen Polypropylene eingesetzt, die die Ausgangsprodukte für die Herstellung der modifizierten Polypropylene bilden.

Für die Herstellung der modifizierten Polypropylene werden die Polypropylene als Partikel in der festen Phase eingesetzt und liegen bevorzugt als Pulver, Granulate oder Grieße vor. Besonders vorteilhaft erweist es sich, direkt aus der Polymerisationsanlage kommende Polyolefinpartikel zu modifizieren.

Eine spezielle Variante der modifizierten Polypropylene als Komponente für die Herstellung der Polyolefinschaumstoffe sind modifizierte Polypropylene, die chemisch gebundenes Butadien, Isopren, Dimethylbutadien und/oder Divinylbenzen als bifunktionell ungesättigtes Monomer enthalten.

Bevorzugt sind Extrusionsschäume mit Schaumdichten von 10-600 kg/m³, insbesondere in Form von Partikelschäumen und von geschäumten Halbzeugen wie Folien, Platten, Rohre oder Profile.

Die erfindungsgemäßen Polyolefinschaumstoffe mit Schaumdichten von 5 bis 700 kg/m³, bevorzugt von 10 bis 500 kg/m³, aus 1 bis 100 Gew.%, bevorzugt 5 bis 100 Gew.%, modifizierten Polypropylenen und 0 bis 99 Gew.%, bevorzugt 0 bis 95 Gew.%, nichtmodifizierten Polypropylenen können ebenfalls Partikelschäume nach dem Suspensionsimprägnierverfahren darstellen.

Die Polyolefinextrusionsschaumstoffe hoher Wärmeformbeständigkeit mit Schaumdichten im Bereich von 5 bis 700 kg/m³, bevorzugt von 10 bis 500 kg/m³, werden erfindungsgemäß aus 1 bis 100 Gew.%, bevorzugt 5 bis 100 Gew.%, modifizierten Polypropylenen und 0 bis 99 Gew.%, bevorzugt 0 bis 95 Gew.%, nichtmodifizierten Polypropylenen unter Einsatz von gasabspaltenden Treibmitteln oder Kohlenwasserstoffen, Halogenkohlenwasserstoffen und/oder Gasen als Treibmittel hergestellt, wobei die zur Herstellung der Polyolefinextrusionsschaumstoffe eingesetzten modifizierten Polypropylene durch
a) Mischung von Polypropylenpartikeln in einem kontinuierlichen Mischer mit 0,05 bis 3 Masse%, bezogen auf die eingesetzten Polypropylene, an Acylperoxiden, Alkylperoxiden, Hydroperoxiden und/oder Perestern als thermisch zerfallende Radikalbildner, die gegebenenfalls mit inerten Lösungsmitteln verdünnt sind, unter Erwärmung auf 30 bis 100°C, bevorzugt auf 70 bis 90°C, nachfolgend
b) Sorption leichtflüchtiger bifunktioneller Monomerer, insbesondere von C₄- bis C₁₀-Dienen und/oder C₇- bis C₁₀- Divinylverbindungen, durch die Polypropylenpartikel aus der Gasphase bei einer Temperatur T(°C) von 20°C bis 120°C in einem kontinuierlichen Gas-Feststoff-Absorber vor dem Aufschmelzen der Mischung, wobei die mittlere Sorptionszeit τₛ [s] 10s bis 1000 s, bevorzugt 60 s bis 600 s, beträgt, und der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
c) Erwärmen und Aufschmelzen der Polypropylenpartikel, in denen die Acylperoxide, Alkylperoxide, Hydroperoxide und/oder Perester als thermisch zerfallende Radikalbildner und die bifunktionell ungesättigten Monomere sorbiert sind, unter einer Atmosphäre aus Inertgas und diesen leichtflüchtigen bifunktionellen Monomeren bei 110°C bis 210°C, wobei die thermisch zerfallenden Radikalbildner zersetzt werden, nachfolgend
d) Erwärmung der Schmelze auf 220°C bis 300°C unter Entfernung nichtumgesetzter Monomerer und Zerfallsprodukte und
e) Granulierung der Schmelze in an sich bekannter Weise
   erfolgt ist, und wobei vor dem Verfahrensschritt a) und/oder e) und/oder vor bzw. während des Verfahrensschrittes c) und/oder d) als weitere Zusatzstoffe 0,01 bis 2,5 Masse% Stabilisatoren, 0,1 bis 1 Masse% Antistatika, 0,2 bis 3 Masse% Pigmente 0,05 bis 1 Masse% Nukleierungsmittel , 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf die eingesetzten Polypropylene, zugesetzt worden sind.

Ein bevorzugtes Anwendungsgebiet der erfindungsgemäßen Polyolefinschaumstoffe hoher Wärmeformbeständigkeit bildet der Verpackungssektor. Besonders bevorzugt sind Lebensmittelverpackungen, insbesondere Mikrowellen-taugliche Verpackungen wie Becher und Assietten, weiterhin Mehrweg- und Transportverpackungen, Paletten für innerbetriebliche Transporte, Verpackungsecken und Gerätehauben.

Ein weiteres bevorzugtes Anwendungsgebiet der erfindungsgemäßen Polyolefinschaumstoffe hoher Wärmeformbeständigkeit bildet der Kraftfahrzeugsektor, wo die Polyolefinschäume insbesondere für Kraftfahrzeuginnenraumteile wie Instrumentenpaneele, Sonnenblenden, Armstützen, Kopfstützen, Luftkanäle und Türverkleidungen sowie für Kraftfahrzeugaußenteile wie Kernmaterial für Stoßfänger und Kantenschutz für Hohltüren eingesetzt werden.

Bevorzugt ist ebenfalls der Einsatz der erfindungsgemäßen Polyolefinschaumstoffe hoher Wärmeformbeständigkeit für Sport- und Freizeitgeräte wie Surfboards, Bodyboards, Fitness-Matten, Rasenunterlagen, Schutzhelme, Schuhsohlen und Gelenkschutz.

Weiterhin stellen industrielle Anwendungen, insbesondere Bauteile von Elektro- und Elektronikgeräten, Dichtungen, Vibrationsunterlagen, Bojen und Ölsperren und Anwendungen auf dem Bausektor, insbesondere Unterdachfolien, Fußbodenisolationen, Hausisolationsplatten und Rohrisolationsschalen, ein bevorzugtes Einsatzgebiet dar.

Die Erfindung wird durch nachfolgende Beispiele erläutert :

### Beispiel 1

Für die Herstellung eines Extrusionsschaumes wird eine Mischung aus 40 Gew.% eines nichtmodifizierten Polypropylen-Homopolymers (Schmelzindex von 0,2 g/10 min bei 230°C/2,16 kp) und 60 Gew.% eines modifizierten statistischen Polypropylen-Copolymers (IR-spektroskopisch ermittelten Gehalt an gebinndenem Divinylbenzen von 0,32 Gew.%, Schmelzindex von 1,35 g/10 min bei 230°C/2,16 kp) eingesetzt.

Die Herstellung des modifizierten statistischen Polypropylen-Copolymers erfolgt durch homogene Durchmischung eines pulverförmigen statistischen Polypropylen-Copolymers (Schmelzindex von 0,85 g/10 min bei 230°C/2,16 kp, mittlerer Partikeldurchmesser 0,85 mm) mit 0,05% Hydrotalcit, 0,05 Gew.% Calciumstearat und 0,45 Gew.% tert.Butylperoxybenzoat (jeweils bezogen auf das Polypropylen-Copolymer) in einem Durchlaufmischer bei 70°C und Überführung des mit thermisch zerfallendem Radikalbildner und Hilfsstoffen beladenen Polypropylen-Copolymers in einem kontinuierlichen Schneckenmischer. Bei einer Verweilzeit von 4 min bei 70°C wird das Polypropylen-Copolymer durch das Divinylbenzen enthaltende Kreislaufgas mit 0,35 Gew.% Divinylbenzen, bezogen auf das Polypropylen-Copolymer, sorptiv beladen. Nach Dosierung in den Doppelschneckenextruder wird das beladene Polypropylenpulver unter Zusatz von 0,1 Masse% Irganox 1010 und 0,1 Masse% Irgaphos 168 bei einer Massetemperatur von 225°C aufgeschmolzen, nach einer Grobentgasung unter Eindosierung von Wasser als Schleppmittel einer Feinentgasung unterzogen, ausgetragen und granuliert.

Die Verarbeitung der Mischung aus 40 Gew.% des nichtmodifizierten Polypropylen-Homopolymers (Schmelzindex von 0,2 g/10 min bei 230°C/2,16 kp) und 60 Gew.% des modifizierten statistischen Polypropylen-Copolymers zum Extrusionsschaum erfolgt in einer Tandem-Extrusionsanlage, wobei die beiden Polypropylenkomponenten und 0,15 Gew.% einer Mischung aus Natriumbicarbonat und Citronensäure (bezogen auf das Polypropylengemisch) in einen Homogenisierextruder (Temperaturprofil 175/185/190/215°C) überführt werden. In die Schmelze wird 6,2 Gew.% (bezogen auf das Polypropylengemisch) eines Methylbutan-Gemischs dosiert. Nach Homogenisierung der Mischung wird die Schmelze in den Schaumextruder (Temperaturprofil 175/170/ 170/165/165 °C) überführt, über eine Ringdüse ausgetragen und unter interner Luftkühlung als Schaumfolienschlauch abgezogen und aufgehaspelt.

Die resultierende Schaumfolie mit einer Dichte von 205 kg/m³ und einen Biegemodul von 14,5 x 10⁷ N/m² wird zur Herstellung von Tiefzieh-Lebensmittelverpackungen eingesetzt.

### Beispiel 2

Für die Herstellung eines Partikel-Extrusionsschaumes wird eine Mischung aus 45 Gew.% eines statistischen Polypropylen-Copolymers (Schmelzindex von 0,65 g/10 min bei 230°C/2,16 kp) und 55 Gew.% eines modifizierten Polypropylen-Homopolymers (IR-spektroskopisch ermittelter Gehalt an gebundenem Butadien 1,0 Gew.%, Schmelzindex von 0,85 g/10 min bei 230°C/2,16 kp) eingesetzt.

Die Herstellung des modifizierten Polypropylen-Homopolymers erfolgt durch homogene Durchmischung eines pulverförmigen Polypropylen-Homopolymers (Schmelzindex von 0,2 g/10 min bei 230°C/2,16 kp, mittlerer Partikeldurchmesser 0,55 mm) mit 0,1Gew.% Calciumstearat und 0,09 Gew.% Bis(tert.butylperoxy)-2,5-dimethylhexan (jeweils bezogen auf das Polypropylen-Homopolymer) in einem kontinuierlichen Durchlaufmischer bei 45°C. Anschließend wird das mit thermisch zerfallendem Radikalbildner und Hilfsstoff beladene Polypropylen-Homopolymer wird in einen kontinuierlichen Schneckenmischer überführt und bei einer Verweilzeit von 6 min bei 45°C durch das Butadien enthaltende Kreislaufgas mit 1,1 Gew.% Butadien, bezogen auf das Polypropylen-Homopolymer, sorptiv beladen. Nach Dosierung in den Doppelschneckenextruder wird das beladene Polypropylenpulver unter Zusatz von 0,1 Masse% Irganox 1010 und 0,1 Masse% Irgaphos 168 bei einer Massetemperatur von 235°C aufgeschmolzen, nach einer Grobentgasung unter Eindosierung von Wasser als Schleppmittel einer Feinentgasung unterzogen, ausgetragen und granuliert.

Die Verarbeitung der Mischung aus 45 Gew.% statistischem Polypropylen-Copolymer (Schmelzindex von 0,65 g/10 min bei 230°C/2,16 kp) und 55 Gew.% modifiziertem Polypropylen-Homopolymer (Gehalt an gebundenem Butadien 1,0 Gew.%, Schmelzindex von 0,85 g/10 min bei 230°C/2,16 kp) zu einem Extrusionspartikelschaum erfolgt in einem Schaumextruder unter Zusatz von 1,3 Gew.% einer Mischung aus Natriumbicarbonat und Citronensäure als Nukleierungsmittel und 9,5% eines Methylbutan-Gemischs als Treibmittel, das bei 195°C in die Kunststoffschmelze injiziert wird. Die aufgeschäumte Schmelze wird bei einer Düsentemperatur von 152°C ausgetragen und der resultierende geschäumte Strang unmittelbar in Segmente geschnitten. Zur Erzielung des Druckausgleichs Zelleninnendruck/Umgebung werden die Schaumstoffpartikel 20 Std. bei Raumtemperatur gelagert.

Der Partikelschaum wird nach dem 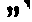 Steam-Chest-Molding"- Verfahren durch Blasen von überhitztem Wasserdampf durch die mit dem Partikelschaum gefüllte Form zu Rohrisolationsschalen für eine Einsatztemperatur bis 120°C mit einer Formteildichte von 95 kg/m³ verarbeitet. Ausgestanzte Prüfkörper besitzen eine Zugfestigkeit von 710 kPa und eine Wasseraufnahme von 1,15% (23⁰C, 170 Std.).

## Patentansprüche

1. Polyolefinschaumstoffe hoher Wärmeformbeständigkeit mit Schaumdichten im Bereich von 5 bis 700 kg/m³, bevorzugt von 10 bis 500 kg/m³, aus 1 bis 100 Gew.%, bevorzugt 5 bis 100 Gew.%, modifizierten Polypropylenen und 0 bis 99 Gew.%, bevorzugt 0 bis 95 Gew.%, nichtmodifizierten Polypropylenen, dadurch gekennzeichnet, daß die zur Herstellung der Polyolefinschaumstoffe eingesetzten modifizierten Polypropylene durch
a) Mischung von Polypropylenpartikeln in einem kontinuierlichen Mischer mit 0,05 bis 3 Masse%, bezogen auf die eingesetzten Polypropylene, an Acylperoxiden, Alkylperoxiden, Hydroperoxiden und/oder Perestern als thermisch zerfallende Radikalbildner, die gegebenenfalls mit inerten Lösungsmitteln verdünnt sind, unter Erwärmung auf 30 bis 100°C, bevorzugt auf 70 bis 90°C, nachfolgend
b) Sorption leichtflüchtiger bifunktioneller Monomerer, insbesondere von C₄- bis C₁₀-Dienen und/oder C₇- bis C₁₀- Divinylverbindungen, durch die Polypropylenpartikel aus der Gasphase bei einer Temperatur T(°C) von 20°C bis 120°C in einem kontinuierlichen Gas-Feststoff-Absorber vor dem Aufschmelzen der Mischung, wobei die mittlere Sorptionszeit τₛ [s] 10s bis 1000 s, bevorzugt 60 s bis 600 s, beträgt, und der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
c) Erwärmen und Aufschmelzen der Polypropylenpartikel, in denen die Acylperoxide, Alkylperoxide, Hydroperoxide und/oder Perester als thermisch zerfallende Radikalbildner und die bifunktionell ungesättigten Monomere sorbiert sind, unter einer Atmosphäre aus Inertgas und diesen leichtflüchtigen bifunktionellen Monomeren bei 110°C bis 210°C, wobei die thermisch zerfallenden Radikalbildner zersetzt werden, nachfolgend
d) Erwärmung der Schmelze auf 220°C bis 300°C unter Entfernung nichtumgesetzter Monomerer und Zerfallsprodukte und
e) Granulierung der Schmelze in an sich bekannter Weise
erfolgt, wobei vor dem Verfahrensschritt a) und/oder e) und/oder vor bzw. während des Verfahrensschrittes c) und/oder d) als weitere Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel , 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf die eingesetzten Polypropylene, zugesetzt werden können.

2. Polyolefinschaumstoffe hoher Wärmeformbeständigkeit nach Anspruch 1, dadurch gekennzeichnet, daß die modifizierten Polypropylene aus modifizierten Propylen-Homopolymeren, insbesondere aus modifizierten Propylen-Homopolymeren auf Basis von Polypropylen-Homopolymeren mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w} / Mₙ -Werten von 5 bis 60, die in einer Reaktorkaskade unter Einsatz von Ziegler-Natta-Katalysatoren oder Metallocenkatalysatoren hergestellt wurden, und/oder aus modifizierten Copolymeren aus Propylen mit α-Olefinen mit 2 bis 18 C-Atomen, bevorzugt aus modifizierten statistischen Propylen-Copolymeren, modifizierten Propylen-Blockcopolymeren, modifizierten statistischen Propylen-Blockcopolymeren und/oder modifizierten elastomeren Polypropylenen, oder aus Mischungen der genannten modifizierten Polypropylene, bestehen.

3. Polyolefinschaumstoffe hoher Wärmeformbeständigkeit nach Anspruch 1 und 2, dadurch gekennzeichnet, daß die nichtmodifizierten Polypropylene aus Propylen-Homopolymeren und/oder aus Copolymeren aus Propylen mit α-Olefinen mit 2 bis 18 C-Atomen, bevorzugt aus statistischen Propylen-Copolymeren, Propylen-Blockcopolymeren, statistischen Propylen-Blockcopolymeren und/oder elastomeren Polypropylenen, oder aus Mischungen der genannten Polypropylene, bestehen.

4. Polyolefinschaumstoffe hoher Wärmeformbeständigkeit nach Anspruch 1 bis 3, dadurch gekennzeichnet, daß die modifizierten Polypropylene chemisch gebundenes Butadien, Isopren, Dimethylbutadien und/oder Divinylbenzen als bifunktionell ungesättigtes Monomer enthalten.

5. Polyolefinschaumstoffe hoher Wärmeformbeständigkeit aus 5 bis 100 Gew.% modifizierten Polypropylenen und 0 bis 95% nichtmodifizierten Polypropylenen nach Anspruch 1 bis 4, dadurch gekennzeichnet, daß die Polyolefinschaumstoffe Extrusionsschäume mit Schaumdichten von 10-600 kg/m³, bevorzugt in Form geschäumter Halbzeuge, insbesondere von Folien, Platten, Rohren und/oder Profilen, oder Partikelschäume sind.

6. Verfahren zur Herstellung von Polyolefinextrusionsschaumstoffen hoher Wärmeformbeständigkeit mit Schaumdichten im Bereich von 5 bis 700 kg/m³, bevorzugt von 10 bis 500 kg/m³, aus 1 bis 100 Gew.%, bevorzugt 5 bis 100 Gew.%, modifizierten Polypropylenen und 0 bis 99 Gew.%, bevorzugt 0 bis 95 Gew.% nichtmodifizierten Polypropylenen unter Einsatz von gasabspaltenden Treibmitteln oder Kohlenwasserstoffen, Halogenkohlenwasserstoffen und/oder Gasen als Treibmittel, dadurch gekennzeichnet, daß die zur Herstellung der Polyolefinextrusionsschaumstoffe eingesetzten modifizierten Polypropylene durch
a) Mischung von Polypropylenpartikeln in einem kontinuierlichen Mischer mit 0,05 bis 3 Masse%, bezogen auf die eingesetzten Polypropylene, an Acylperoxiden, Alkylperoxiden, Hydroperoxiden und/oder Perestern als thermisch zerfallende Radikalbildner, die gegebenenfalls mit inerten Lösungsmitteln verdünnt sind, unter Erwärmung auf 30 bis 100°C, bevorzugt auf 70 bis 90°C, nachfolgend
b) Sorption leichtflüchtiger bifunktioneller Monomerer, insbesondere von C₄- bis C₁₀-Dienen und/oder C₇- bis C₁₀- Divinylverbindungen, durch die Polypropylenpartikel aus der Gasphase bei einer Temperatur T(°C) von 20°C bis 120°C in einem kontinuierlichen Gas-Feststoff-Absorber vor dem Aufschmelzen der Mischung, wobei die mittlere Sorptionszeit τₛ [s] 10s bis 1000 s, bevorzugt 60 s bis 600 s, beträgt, und der Anteil der bifunktionell ungesättigten Monomeren 0,01 bis 10 Masse%, bevorzugt 0,05 bis 2 Masse%, bezogen auf die eingesetzten Polypropylene, beträgt, nachfolgend
c) Erwärmen und Aufschmelzen der Polypropylenpartikel, in denen die Acylperoxide, Alkylperoxide, Hydroperoxide und/oder Perester als thermisch zerfallende Radikalbildner und die bifunktionell ungesättigten Monomere sorbiert sind, unter einer Atmosphäre aus Inertgas und diesen leichtflüchtigen bifunktionellen Monomeren bei 110°C bis 210°C, wobei die thermisch zerfallenden Radikalbildner zersetzt werden, nachfolgend
d) Erwärmung der Schmelze auf 220°C bis 300°C unter Entfernung nichtumgesetzter Monomerer und Zerfallsprodukte und
e) Granulierung der Schmelze in an sich bekannter Weise
erfolgt, wobei vor dem Verfahrensschritt a) und/oder e) und/oder vor bzw. während des Verfahrensschrittes c) und/oder d) als weitere Zusatzstoffe 0,01 bis 2,5 Masse% Stabilisatoren, 0,1 bis 1 Masse% Antistatika, 0,2 bis 3 Masse% Pigmente, 0,05 bis 1 Masse% Nukleierungsmittel , 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf die eingesetzten Polypropylene, zugesetzt werden können.

7. Anwendung von Polyolefinschaumstoffen hoher Wärmeformbeständigkeit nach einem oder mehreren der Ansprüche 1 bis 5 auf dem Verpackungssektor, bevorzugt für Lebensmittelverpackungen, insbesondere von Mikrowellen-tauglichen Verpackungen wie Becher und Assietten, sowie für Mehrweg- und Transportverpackungen, Paletten für innerbetriebliche Transporte, Verpackungsecken und Gerätehauben.

8. Anwendung von Polyolefinschaumstoffen hoher Wärmeformbeständigkeit nach einem oder mehreren der Ansprüche 1 bis 5 auf dem Kraftfahrzeugsektor, bevorzugt für Kraftfahrzeuginnenraumteile wie Instrumentenpaneele, Sonnenblenden, Armstützen, Kopfstützen, Luftkanäle und Türverkleidungen sowie für Kraftfahrzeugaußenteile wie Kernmaterial für Stoßfänger und Kantenschutz für Hohltüren.

9. Anwendung von Polyolefinschaumstoffen hoher Wärmeformbeständigkeit nach einem oder mehreren der Ansprüche 1 bis 5 für Sport- und Freizeitgeräte wie Surfboards, Bodyboards, Fitness-Matten, Rasenunterlagen, Schutzhelme, Schuhsohlen und Gelenkschutzschalen.

10. Anwendung von Polyolefinschaumstoffen hoher Wärmeformbeständigkeit nach einem oder mehreren der Ansprüche 1 bis 5 für industrielle Anwendungen, bevorzugt für Bauteile von Elektro- und Elektronikgeräten, Dichtungen, Vibrationsunterlagen, Bojen und Ölsperren und für Anwendungen auf dem Bausektor, bevorzugt für Unterdachfolien, Fußbodenisolation, Hausisolationsplatten und Rohrisolationsschalen.
